# EUROPÄISCHE PATENTSCHRIFT

(11) **EP 2 182 347 B1**
(45) Veröffentlichungstag und Bekanntmachung des Hinweises auf die Patenterteilung: **19.06.2013**
(21) Anmeldenummer: 09173362.6
(22) Anmeldetag: 17.10.2009
(51) Int. Cl.: G01N 27/90

(54) **Verfahren zur Messung des Verschleißes von Carbon-Keramik-Reibscheiben und Vorrichtung hierfür**
Method for measuring the wear on carbon-ceramic friction discs and device for the same
Procédé de mesure de l'usure de disques de friction en carbone-céramique et dispositif correspondant

(30) Priorität: 17.10.2008 DE 102008051802
(43) Veröffentlichungstag der Anmeldung: 05.05.2010
(73) Patentinhaber: SGL Carbon SE, 65201 Wiesbaden (DE); Audi AG, 85045 Ingolstadt (DE)
(72) Erfinder: Joos, Jürgen, 89191, Nellingen (DE); Marschall, Michael, 86633, Neuburg (DE); Danzer, Martin, 86559, Adelzhausen (DE)
(74) Vertreter: Deckers, Hellmuth Alexander

(56) Entgegenhaltungen:
- DE-B3- 10 234 551
- US-A- 6 037 768
- US-B1- 6 232 774
- NIXON T D ET AL: "NON-DESTRUCTIVE CHARACTERIZATION OF SIC COATED CARBON-CARBON COMPOSITES BY MULTIPLE TECHNIQUES", INTERNATIONAL SAMPE TECHNICAL CONFERENCE, XX, XX, 20. Oktober 1992 (1992-10-20), Seiten T13-T27, XP009032633,
- CORBYN J A: "PULSE INDUCTION METAL DETECTOR. ÖEXPERIMENTAL SYSTEM FOR OVERCOMING MAGNETIC VISCOSITY EFFECTS", 1 March 1980 (1980-03-01), WIRELESS WORLD, IPC BUSINESS PRESS LTD. HAYWARDS HEATH, GB, PAGE(S) 40 - 44, XP000567939,

## Beschreibung

Die Erfindung betrifft ein Verfahren zur Messung des Verschleißes von Carbon-Keramik-Reibscheiben gemäß Anspruch 1.

In dem US-Patent 6,037,768 wird ein Puls-Wirbelstrom-Gerät beschrieben, mit dessen Hilfe die Ergebnisse einer ortsaufgelösten Messung der Fehlstellen von mehrschichtigen Körpern dargestellt werden können. Dabei werden die gemessenen Induktionsspannungen verglichen mit einem Referenzsignal gemessen an einem von Fehlstellen freien Körper. Aus den zeitlich aufgelösten Differenzsignalen werden die Amplituden-Differenzen zum Referenzsignal, und die Zeiten nach dem Einschalten des gepulsten Gleichstroms (t=0) bis zum Nulldurchgang der Differenz zum Referenzsignal bestimmt, daraus wird nach einer Formel ein Index berechnet, der in einem Rechner gespeichert und graphisch ausgegeben werden kann. Die Darstellung ergibt ein Bild der Verteilung von Fehlstellen über die Grundfläche des untersuchten Körpers.

In dem deutschen Patent DE 102 34 551 B3 wird ein Verfahren zur Detektierung der Oxidation von kohlenstoffhaltigen Verstärkungsfasern in Verbundwerkstoffen mit keramischer Matrix wie beispielsweise C/SiC-Werkstoffen (Kohlenstoff-Siliciumcarbid) beschrieben. Da Fasern aus Kohlenstoff (Carbonfasern) insbesondere bei Anwendungen unter höherer Temperatur zur Oxidation neigen, ist der Einsatz solcher Verbundwerkstoffe problematisch für Funktionsteile, insbesondere Sicherheitsteile wie Bremsscheiben von Fahrzeugen. Bei solchen Bremsscheiben konnte bei Betriebstemperaturen von ca. 700 °C bis 1000 °C beobachtet werden. Bei fortgeschrittenem Abbrand oder Oxidation der Carbonfasern kann eine Strukturschädigung bei Bremsscheiben eintreten, die deren Steifigkeit und Festigkeit negativ beeinflusst. Eine Möglichkeit zur zerstörungsfreien Prüfung bietet die in diesem Patent beschriebene Detektion durch das an sich bekannte Wirbelstromverfahren. Der für die Induktion der Wirbelströme notwendige elektrische Leiter, nämlich die kohlenstoffhaltigen Fasern, wird durch Oxidation teilweise oder vollständig zerstört, was sich im Ausgangssignal der Wirbelstrom-Messanordnung zeigt.

Es wurde jedoch gefunden, daß die Empfindlichkeit der Messung und deren Reproduzierbarkeit verbesserungsbedürftig ist.

Die bekannte und in dem oben bezeichneten Patent beschriebene Ausführungsform eines Wirbelstrom-Messverfahrens sieht eine Primär- oder Erregerspule und eine Sekundär- oder Prüf- oder Detektorspule vor, die vorzugsweise innerhalb der Primärspule angeordnet ist, wobei ein stetiges (nämlich in der Amplitude konstantes) alternierendes magnetisches Wechselfeld in der Erregerspule erzeugt wird, das zu einem ebenso stetigen durch Wirbelströme in dem zu untersuchenden leitfähigen Körper erzeugten Sekundärmagnetfeld führt, das mit der Sekundärspule durch die darin induzierte elektrische Spannung detektiert werden kann.

Daneben ist das sogenannte Pulsinduktionsverfahren bekannt, bei dem eine (Primär-) Spule mit einem gepulsten Gleichstrom gespeist wird. Der Ein- und Ausschalt-Stromstoß in der Spule führt zu einer raschen Änderung (Aufbau und Abbau) des in der Spule erzeugten Magnetfeldes, wobei die Magnetfeldänderung in bekannter Weise in einem leitfähigen Körper einen Wirbelstrom erzeugen kann. Dieser Wirbelstrom wiederum erzeugt ein korrespondierendes Magnetfeld, das durch eine weitere Spule (Sekundärspule) oder vorteilhaft in derselben Spule (Primärspule) durch die darin induzierte elektrische Spannung nachgewiesen werden kann.

Die in Verbundwerkstoffen mit keramischer Matrix und kohlenstoffhaltigen Verstärkungsfasern enthaltenen kohlenstoffhaltigen Fasern sind elektrisch leitend und haben üblicherweise einen Durchmesser von 5 µm bis 12 µm, bevorzugt 6 µm bis 10 µm, und als Kurzfasern eine Länge von 0,1 mm bis 30 mm, bevorzugt 0,2 mm bis 5 mm. Sie sind in den genannten Verbundwerkstoffen im Fall von sogenannten C/SiC-Werkstoffen mit einer Matrix aus Siliciumcarbid mit Anteilen von Silicium und Kohlenstoff voneinander durch die nichtleitenden oder halbleitenden (im Fall von Si) Bereiche getrennt. Die Induktion von Wirbelströmen durch ein Magnetfeld ist daher auf die Abmessungen der voneinander isolierten leitenden kohlenstoffhaltigen Fasern oder Carbonfasern und deren Ausrichtung (Orientierung in der Matrix) beschränkt. Beide Tatsachen, Abmessungen und Ausrichtung der leitfähigen Fasern, limitieren die Größe der induzierten Wirbelströme und führen daher auch zu nur sehr geringen Magnetfeldern, die in der Sekundärspule durch Induktion ein messbares Signal erzeugen können.

Da bei dem Pulsinduktionsverfahren ja nur der Effekt des Ausschaltens des Erregerstroms ungestört von dem nach dem Einschalten in der Primärspule fließenden Strom und dem dadurch verursachten Magnetfeld gemessen werden kann, besteht eine messtechnische Beschränkung auf die Bestimmung des Effekts der "Nachwirkung" nach dem Ausschalten. Diese Tatsache in Verbindung mit den durch Abmessung und Orientierung der leitfähigen Fasern ließ nicht erwarten, dass das Pulsinduktionsverfahren in diesem Fall zu nutzbaren Messungen führen kann.

Bei den Untersuchungen, die zu der vorliegenden Erfindung geführt haben, wurde in überraschender Weise festgestellt, dass trotz den für die Anwendung des Pulsinduktionsverfahrens ungünstigen Bedingungen die Reproduzierbarkeit von Messungen des Abfalls des messbaren Signals mit zunehmendem Verschleiß einer CKB-Reibscheibe mittels des Pulsinduktionsverfahrens sowohl bei Mehrfachmessungen derselben Scheibe bei denselben Verschleißzuständen unabhängig von der Stelle der Messung auf der Scheibenoberfläche, und unabhängig vom Verschmutzungszustand der Scheibe außerordentlich hoch war.

Gegenüber der konventionellen Wirbelstrom-Messung mit einem Spulenpaar (als "Primär- und Sekundär-Spule" oder "Erreger- und Detektor-Spule" bezeichnet) hat sich überraschend ergeben, dass sowohl die Empfindlichkeit als auch die Reproduzierbarkeit der Messung mit der Methode der Pulsinduktion in Verbindung mit der Benutzung derselben Spule als Erreger- und Detektor-Spule günstiger waren. So ließen sich bei Wiederholungsmessungen an derselben Scheibe im selben Verschleißzustand Standardabweichungen von 0,3 % bis 0,7 % bezogen auf den Mittelwert bei jeweils 5 Messwerten auch erreichen, wenn die Messungen durch verschiedene Prüfer durchgeführt wurden.

Die Reproduzierbarkeit bei der konventionellen Wirbelstrommethode mittels zweier Spulen ließ sich für dieselben Scheiben nicht unter Standardabweichungen von 2 % bis 1,5 % des Mittelwertes drücken.

Gegenstand der vorliegenden Erfindung ist daher ein Verfahren zur Bestimmung des Verschleißzustandes von Carbon-Keramik-Reibscheiben, also Reibscheiben mit einer nichtleitenden oder höchstens bereichsweise halbleitenden keramischen Matrix bevorzugt enthaltend Siliciumcarbid, Silicium und Kohlenstoff, und mit leitfähigen in der Matrix verteilten und voneinander durch die Matrix isolierten, Kohlenstoff enthaltenden Verstärkungsfasern, insbesondere Carbonfasern, unter Nutzung des Pulsinduktionsverfahrens, bei dem eine Spule (Primärspule) von einem zeitlich veränderlichen Gleichstrom durchflossen wird und in einem in der Nachbarschaft befindlichen leitfähigen Substrat ein entsprechend zeitlich veränderliches Magnetfeld hervorruft, das wiederum eine zeitlich veränderliche Spannung in dem Substrat induziert, die einen zeitlich veränderlichen kreisförmigen Stromfluß in dem leitfähigen Substrat hervorruft. Dieser Stromfluß ist der induzierten Spannung und der (lokalen) Leitfähigkeit des Substrats proportional. Der Stromfluß erzeugt wiederum ein zeitlich veränderliches Magnetfeld, das in einer Sekundärspule oder bevorzugt in der jetzt stromlosen Primärspule eine Sekundärspannung erzeugt, deren Größe wiederum insbesondere der Leitfähigkeit des Substrats proportional ist. Unter Konstanthaltung aller anderen Einflussgrößen ist die gemessene Sekundärspannung daher der Leitfähigkeit des Substrats proportional; da die Leitfähigkeit des Substrats mit der Oxidation der kohlenstoffhaltigen Fasern, insbesondere der Carbonfasern, abnimmt, ist die Sekundärspannung ein Maß für den Abfall der Leitfähigkeit durch die Oxidation der leitfähigen Fasern und damit für den Verschleiß der Carbon-Keramik-Reibscheiben.

Überraschenderweise ist die Größe der Sekundärspannung unabhängig von einer Verschmutzung der Carbon-Keramik-Reibscheiben mit dem üblichen Abrieb auf einer Bremsscheibe beispielsweise eines Automobils oder Schienenfahrzeugs, und ebenso unabhängig von der oberflächlichen Beladung der Scheiben und sogar einer Tränkung der im allgemeinen porösen Scheiben mit salzhaltigen wäßrigen Lösungen, die bei der herkömmlichen Wirbelstrom-Methode zu Verfälschungen der gemessenen Werte führen.

In bevorzugter Weise wird eine Spule zunächst als Primärspule, und nach dem Abschalten des Erregerstroms auch als Sekundärspule verwendet.

In weiter bevorzugter Weise wird der die Spule(n) beherbergende Messkopf mit einer unsymmetrischen auf dem Substrat aufliegenden Platte ausgestattet, wodurch der Messkopf mit Hilfe einer auf der Scheibe aufzusetzenden Schablone stets exakt und reproduzierbar positioniert werden kann. Die Schablone weist dazu eine Aussparung auf, die der Gestalt des auf dem Substrat aufliegenden Messkopfs entspricht. Besonders günstig hat sich erwiesen, diese Schablonen mit Stiften auszustatten, die in die durch die Dicke der Bremsscheibe reichenden Perforationslöcher eingreifen und so ebenfalls eine reproduzierbare Positionierung ermöglichen. Die Angabe der Position des Messkopfs für Wiederholungsmessungen kann in diesem Fall besonders günstig zum Beispiel durch Lasermarkierungen auf dem nicht von Bremsklötzen überstrichenen Teil der Bremsscheibe erfolgen.

Die Messung der in der Sekundärspule induzierten Spannung wird mit Vorteil nach dem Abschalten des Stroms durch die Erregerspule gemessen, da in diesem Fall das Magnetfeld der Erregerspule abgeklungen ist und keine störenden Auswirkungen auf die Messung mehr haben kann.

Vorzugsweise ist die keramische Matrix zumindest in der Randschicht des Verbundwerkstoffs ausgebildet und enthält neben Siliciumcarbid (SiC) als Hauptbestandteil (also in einem Massenanteil von mindestens 20 %, bevorzugt von mindestens 50 %), auch Silicium (Si) und/oder Siliciumlegierungen. Die C/SiC-Verbundkeramiken können auch Fasern umfassen, die neben Kohlenstoff noch weitere Elemente, wie beispielsweise Si, B, N, P oder Ti enthalten. Diese Fasern sind hochtemperaturbeständig und besitzen gegenüber der vorzugsweise nicht oder halbleitenden Matrix eine signifikant höhere elektrische Leitfähigkeit. Während die Resistivität (spezifischer elektrischer Widerstand) von Carbonfasern ca. 1 µΩ·m bis 10 µΩ·m beträgt, liegt die Resistivität von Silicium bei ca. 1000 µΩ·m, was der Resistivität eines Halbleiter-Materials entspricht, und die von Siliciumcarbid bei ca. 10⁶ bis 10⁷ µΩ·m, was der Resistivität eines Isolators oder Nichtleiters entspricht. Die Verbundwerkstoffe, die hier betrachtet werden, haben eine Resistivität im Bereich von 30 µΩ·m bis 400 µΩ·m. Im folgenden und in den Ansprüchen sind unter dem Begriff Fasern sowohl einzelne Fasern als auch Faserbündel zu verstehen, die durch Polymere oder deren Pyrolyseprodukte, bevorzugt durch graphitischen Kohlenstoff gebunden, sein können. Die Fasern bzw. Faserbündel sind in der Matrix regellos verteilt, wobei durch die halbleitende oder nichtleitende Matrix eine elektrische Leitung zwischen den verteilten Fasern bzw. Faserbündeln beschränkt ist.

Als Faserbündel werden Agglomerate von im wesentlichen parallelen Kurzfasern bezeichnet, in denen ca. 500 bis ca. 20.000 Einzelfasern vorhanden sind.

Die Herstellung von C/SiC-Werkstoff kann in bekannter Weise von einem CFC-Werkstoff ausgehen, also einem mit Carbonfasern verstärkten porösen Kohlenstoff-Werkstoff. Besonders bevorzugt ist die Herstellung von kurzfaserbündelverstärktem CFK (mit Carbonfasern verstärkte Kunststoffe), bestehend aus gegebenenfalls mit einer carbonisierbaren Substanz und/oder mit Kohlenstoff beschichteten Carbonfasern oder Carbonfaserbündeln und zu einen Duroplast-Werkstoff gehärteten Bindern, der gegebenenfalls noch Füllstoffe enthalten kann, der gegebenenfalls mit einem Presskern zur gewünschten Form gepresst und ausgehärtet und hierauf carbonisiert und/oder graphitiert wird, so daß ein CFC- (auch als "C/C-" bezeichnet) Formkörper als Zwischenprodukt entsteht. Da die CFK-und CFC-Zwischenprodukte im Vergleich zur späteren Verbundkeramik noch eine relativ geringe Härte aufweisen, werden spanabhebende Bearbeitungsgänge wie beispielsweise das Anbringen von Bohrungen oder das Fräsen bevorzugt an diesen Zwischenprodukten durchgeführt.

Der vorzugsweise verwendete Formkörper aus CFC wird anschließend zu der gewünschten Endform bearbeitet und dann bei Temperaturen um etwa 1600 ^{°}C im Vakuum oder unter Inertgas mit einer Siliciumschmelze oder einer Schmelze einer Siliciumlegierung infiltriert, wodurch zumindest ein Teil des Kohlenstoffs der Matrix und/oder der Fasern in SiC umgewandelt wird. Neben Silicium können als weitere Bestandteile der Schmelze auch Bor (B) und die Metalle der Nebengruppen I bis VIII verwendet werden, insbesondere Ti, Cr, Fe, Mo und Ni. Durch die Flüssiginfiltration des CFC-Formkörpers mit Silicium oder einer siliciumhaltigen Schmelze entsteht ein dichter, fester und sehr harter Formkörper aus C/SiC-Werkstoff enthaltend Fasern, im allgemeinen Carbonfasern, mit einer Matrix aus überwiegend SiC und Si.

Alternativ kann die Matrix des Formkörpers ganz oder teilweise durch eine Gasphaseninfiltration (CVD oder CVI) erzeugt werden. Dann weist die Matrix einen relativ hohen SiC-Gehalt auf, typischerweise einen Massenanteil von über 95 %. Weiterhin kann die Herstellung der Matrix durch die Pyrolyse von Si-haltigen, präkeramischen Polymeren erfolgen, zum Beispiel durch die Pyrolyse von Polymeren, die eines oder mehrere der Elemente Si, B, C, N, P oder Ti enthalten.

Die C/SiC-Formkörper werden vorzugsweise in Form von Bremsscheiben, Bremsbelägen oder Kupplungsscheiben gefertigt. Wegen der guten Temperaturbeständigkeit ist jedoch jegliche weitere Anwendung denkbar, bei welcher hohe Temperaturen auftreten, beispielsweise als Auskleidungskörper zur Auskleidung von Öfen und Brennkammern oder als Hitzeschilde, insbesondere beim Triebwerks- oder Düsenbau. Formkörper werden als "thermisch hochbelastbar" bezeichnet, wenn sie die bei diesen Anwendungen auftretenden Temperaturen überstehen, ohne daß ihre Festigkeit auf weniger als 80 % des Ausgangswertes absinkt.

In jedem Fall liegt ein Formkörper aus Verbundkeramik mit in einer nicht- oder halbleitenden Matrix aus SiC und Si eingebetteten, kohlenstoffhaltigen Fasern vor. Im Sinne der Erfindung ist dabei das Si als Halbleiter und das SiC als Nichtleiter anzusehen. Dies trifft insbesondere bei den zur Messung bevorzugten Temperaturen weit unterhalb der maximalen Anwendungstemperatur der Bauteile zu. Alternativ kann die Matrix auch aus einem anderen elektrisch nichtleitenden Material bestehen, beispielsweise aus TiC, TiC/SiC, Si₃N₄, SiC/Si₃N₄, oder Al₂O₃.

Der Massenanteil an SiC in der Verbundkeramik liegt vorzugsweise bei mindestens 25 %, besonders bevorzugt bei mindestens 50 %, bezogen auf die gesamte Masse des Formkörpers. Je nach Tiefe der Infiltration mit den Stoffen, die nach Reaktion mit Kohlenstoff die Matrix bilden, kann sich diese Verbundkeramik nur auf eine Randschicht beschränken oder auch durch den gesamten Formkörper erstrecken. Der Massenanteil der Matrix und deren Zusammensetzung können dabei innerhalb des Formkörpers variieren, insbesondere in der Tiefe, wobei der Massenanteil der Matrix an der Oberfläche bevorzugt höher liegt als im Inneren des Formkörpers, mitunter auch bei nahezu 100 %.

Gemäß einer bevorzugten Variante wird der CFC-Werkstoff durch Flüssigsilicierung in C/SiC umgewandelt. Dabei spielt es keine Rolle, ob der CFC-Werkstoff ganz oder nur teilweise mit Silicium oder Siliciumlegierung infiltriert und zu C/SiC umgesetzt wird. Es muss lediglich die Randschicht des Formkörpers zu C/SiC umgesetzt worden sein, die auch zu nahezu 100 % aus dem Material der Matrix, insbesondere aus SiC, bestehen kann. Verwendet werden auch CFC-Formkörper, bei denen eine Silicierung lediglich im Randbereich durchgeführt wurde, aber der Kern aus CFC bestehen bleibt. Die Dicke der Randschicht für die vorliegende Erfindung beträgt mindestens 0,2 mm, vorzugsweise mehr als 0,5 mm und besonders bevorzugt mehr als 5 mm.

Die Flüssigsilicierung von CFC führt nach dem Abkühlen des Werkstoffs von einer Prozesstemperatur von etwa 1500 °C bis 1900 ^{°}C auf Raumtemperatur aufgrund der unterschiedlichen Temperaturausdehnungskoeffizienten von Fasern und Matrix zu einer mit offenen Mikrorissen und Poren durchsetzten Matrix, wobei sich die offenen Risse und Poren bis weit in die Tiefe des aus der C/SiC-Keramik bestehenden Formkörpers erstrecken und sich bevorzugt an den kohlenstoffhaltigen Verstärkungsfasern ausbilden. Dies gilt ebenso für die Verfahren der Gasphaseninfiltration oder der Polymerpyrolyse, da auch hier von hoher Prozesstemperatur auf geringere Temperaturen abgekühlt wird. Dieser Effekt tritt besonders dann auf, wenn die SiC-haltige Randschicht einen höheren Massenanteil der Matrix als das Innere des Werkstoffes hat.

Diese offenen Risse und Poren bilden Pfade für eindringenden Sauerstoff, so dass insbesondere die in der Matrix gebundenen kohlenstoffhaltigen Fasern der Oxidation ausgesetzt sind. Anwendungen des Formkörpers im Hochtemperaturbereich und in korrosiven Medien, wie sie für derartige Werkstoffe üblich sind, verstärken den oxidativen Angriff weiter. Wie eingangs bereits erwähnt, werden aus dem C/SiC-Werkstoff unter anderem Bremsscheiben von Fahrzeugen gefertigt, wobei diese Bauteile im Betrieb Temperaturen von über 700 °C erreichen können, so dass insbesondere solche Bauteile einem oxidativen und strukturschädigenden Angriff ausgesetzt sind. Bei diesem Sicherheitsbauteil ist die Kenntnis des genauen Werkstoffzustandes von besonderer Bedeutung.

Die Erfindung wird durch die nachfolgenden Beispiele erläutert.

Eine innenbelüftete Carbon-Keramik-Bremsscheibe (C/SiC) mit den Abmessungen Außenradius = 205 mm, Dicke 38 mm, mit einem metallischen Topf wurde in fabrikneuem Zustand gewogen und an drei ausgewählten Stellen im Abstand von 20 mm von der Peripherie mit einem Pulsinduktionsmesskopf gemessen.

Die Bremsscheibe wurde dann einem sog. Fading-Test unterworfen. Dabei wird auf dem Prüfstand die Fahrzeugmasse durch eine Schwungmasse simuliert. Der Fading-Test simuliert eine Bremsung des Fahrzeugs aus 0,8-facher Maximalgeschwindigkeit des Fahrzeugs auf 100 km/h mit einer Verzögerung zwischen 0,6 g und 1,0 g, wobei jeweils 25 Einzelbremsungen zu einem sog. Fadingzyklus zusammengefasst werden können. "g" steht für die Beschleunigung einer Masse durch die irdische Schwerkraft, im Durchschnitt 9,81 m · s⁻².

Nach jedem 10. Fadingzyklus wurde die Scheibe gewogen und es wurden Messungen an denselben Stellen wie vor dem Test mit dem Pulsinduktionsmesskopf durchgeführt, wobei durch Benutzung einer Schablone für jede der Messstellen eine exakte Positionierung sichergestellt wurde.

### In der Tabelle 1 sind die Ergebnisse zusammengestellt:

**Tabelle 1 Messergebnisse für Wägung und Pulsinduktionsmessung**

| | Induzierte Spannung in µV | | | Gewicht in g |
|---|---|---|---|---|
| | Position 1 | Position 2 | Position 3 | |
| neu | 57,5 | 54,5 | 50 | 9855,5 |
| nach 10 Fadingzyklen | 49 | 45,2 | 40,3 | 9843,2 |
| nach 20 Fadingzyklen | 44,3 | 40,5 | 36 | 9834,8 |
| nach 30 Fadingzyklen | 38,3 | 36,1 | 32,9 | 9824,4 |
| nach 40 Fadingzyklen | 35,9 | 31,7 | 28,2 | 9802,6 |
| nach 50 Fadingzyklen | 33,7 | 29,3 | 26,1 | 9778,9 |

Es ist zu ersehen, dass die Signale der Pulsinduktionsmessung proportional zum Gewichtsverlust der Bremsscheibe durch Abbrand der Carbonfasern sind.

Ein erheblicher Vorteil der Messung durch Pulsinduktion besteht darin, dass die Bremsscheibe zur Messung des Verschleißzustands nicht demontiert werden muss; die Messung ist vielmehr auch bei der betriebsmäßig eingebauten Bremsscheibe möglich.

Ein weiterer Vorteil besteht darin, dass auch bei oberflächlicher Verschmutzung und sogar bei in die Porosität des Bremsscheibenrings eingedrungener Salzlösung eine verlässliche Messung möglich ist, während die gravimetrische Methode in diesem Fall wegen der Verfälschung des Gewichts durch Schmutz und Porenfüllung versagt.

## Patentansprüche

1. Verfahren zur Bestimmung des Verschleißzustandes von Carbon-Keramik-Reibscheiben mit leitfähigen in der Matrix verteilten und voneinander durch die Matrix isolierten, Kohlenstoff enthaltenden Verstärkungsfasern als Substrat unter Nutzung des Pulsinduktionsverfahrens durch Abschalten eines Gleichstroms in einer Primärspule und Messung der in einer Sekundärspule induzierten Spannung nach dem Abschalten des Gleichstroms durch die Primärspule, deren Größe der Leitfähigkeit des Substrats proportional ist.

2. Verfahren nach Anspruch 1, **dadurch gekennzeichnet, dass** die Primärspule nach Abschalten des sie durchfließenden Gleichstroms als Sekundärspule genutzt wird.

3. Verfahren nach Anspruch 1 oder Anspruch 2, **dadurch gekennzeichnet, daß** die Spulen in einem Messkopf angeordnet sind, wobei der Messkopf zur Messung durch Positioniermittel auf dem Substrat ortsmäßig reproduzierbar angebracht wird.

## Claims

1. Method for determining the state of wear of carbon-ceramic friction discs with conductive carbon-containing reinforcing fibres distributed in the matrix and insulated from one another by the matrix as substrate using the pulse induction method by disconnection of a direct current in a primary coil and measurement of the voltage induced in a secondary coil after the disconnection of the direct current through the primary coil, which has a magnitude which is proportional to the conductivity of the substrate.

2. Method according to Claim 1, **characterized in that** the primary coil is used as secondary coil after disconnection of the direct current flowing through said primary coil.

3. Method according to Claim 1 or Claim 2, **characterized in that** the coils are arranged in a measuring probe, wherein the measuring probe is attached in locationally reproducible fashion on the substrate by positioning means for the measurement.

## Revendications

1. Procédé de détermination de l'état d'usure de disques de frottement en céramique-carbone présentant comme substrat des fibres conductrices de renfort contenant du carbone, réparties dans la matrice et isolées les unes des autres par la matrice, par recours à un procédé d'induction pulsée réalisé en débranchant un courant continu dans une bobine primaire et en mesurant la tension induite dans une bobine secondaire après le débranchement du courant continu traversant la bobine primaire et dont le niveau est proportionnel à la conductivité du substrat.

2. Procédé selon la revendication 1, **caractérisé en ce que** la bobine primaire est utilisée comme bobine secondaire après le débranchement du courant continu qui la traverse.

3. Procédé selon les revendications 1 ou la revendication 2, **caractérisé en ce que** les bobines sont disposées dans une tête de mesure, la tête de mesure étant placée sur le substrat par des moyens de positionnement de manière à permettre une mesure reproductible localement.
